# EUROPEAN PATENT APPLICATION

(11) **EP 4 335 684 A1**
(43) Date of publication of application: **13.03.2024**
(21) Application number: 23192574.4
(22) Date of filing: 22.08.2023
(51) Int. Cl.: B60L 15/00, B60L 50/60, B60L 50/64

(54) **INTEGRATED DEVICE FOR POWER SUPPLYING ELECTRIC VEHICLES**

(30) Priority: 08.09.2022 IT 202200018303
(71) Applicant: Rei Lab S.r.l., 42122 Reggio Emilia (IT); Dell'Orto S.p.A, 20831 Seregno (MB) (IT)
(72) Inventor: ESPOSITO CORCIONE, Giuseppe, 80128 NAPOLI (IT); CARMIGNANI, Luca, 56017 San Giuliano Terme (PI) (IT); CANTINI, Jury, 56021 CASCINA (PI) (IT); DELL'ORTO, Davide, 22066 MARIANO COMENSE (CO) (IT); PALAMIDESSI, Fabio, 20017 RHO (MI) (IT); DELL'ORTO, Andrea Piero, 20900 MONZA (MB) (IT)
(74) Representative: Corradini, Corrado

(57) **Abstract**

An integrated device (120) is described for power supplying electric vehicles (100), comprising at least: an outer casing (125), a rechargeable electric battery (130) placed in the outer casing (125), a charging socket (135) associated with the outer casing (125) and adapted to allow charging the electric battery (130), an inverter (160) placed in the outer casing (125) and adapted to convert a DC voltage supplied by the electric battery (130) into an AC voltage, a first electrical connector (170) associated with the outer casing (125) and connectable to an electrical machine (115) to transmit the AC voltage generated by the inverter (160) to the latter, and an electronic control unit (175) placed in the outer casing (125), power supplied by the electric battery (130) and configured to manage the operation of the electric battery (130) and of the inverter (160).

## Description

### Technical Field

The present invention relates to an integrated device for power supplying an electric vehicle, such as an electric scooter, an electric bicycle or an electric kick scooter.

### State of the art

As is well known, the powertrain of an electric vehicle normally comprises: an electrical machine (e.g. motor) in alternating current adapted to supply the mechanical torque to the vehicle's locomotion members (e.g. drive wheels); an electric battery (e.g. lithium-ion) adapted to supply the electric energy for the operation of the electrical machine; and an inverter (e.g. three-phase bridge) adapted to convert the direct voltage output from the battery into an alternating voltage useful for powering the electrical machine.

These components are currently manufactured as structurally separate devices.

The electric battery thus comprises its own outer casing, with which sockets are generally associated for charging, for power supplying the inverter and for communication to the vehicle operator.

The electric battery is also associated with a management system, usually referred to as BMS (Battery Management System), which is responsible for managing battery operation, battery safety and communication with users.

This battery management system usually comprises a front-end circuit to detect one or more battery operating parameters and an electronic control unit, usually based on a microcontroller, which is configured to manage battery operation on the basis of the front-end circuit's readings and, possibly, on the basis of measurements made by other sensors, such as a battery temperature sensor and/or a current sensor.

In particular, the electronic control unit can be configured to control the switching on and off of appropriate battery charging and discharging switches, connected respectively to the charging socket and the electrical connector, in such a way as to keep the battery always within predefined safety conditions, usually referred to as SOA (Safe Operating Area), which guarantee its efficiency and durability.

To enable the operation of the management system, the battery is usually also associated with a power supply, which is designed to receive the battery voltage and convert it into a different voltage suitable for supplying the front-end circuit and the electronic control unit.

Likewise, the inverter includes its own outer casing, which is equipped with at least a first electrical connector for connection to the electrical machine (e.g. motor) and a second electrical connector for connection to the battery.

The inverter's outer casing can also house an inverter driver circuit and a further electronic control unit, typically based on a microcontroller and usually called VMU (Vehicle Management Unit), which is configured to manage the operation of the vehicle, controlling the inverter driver circuit and acting as a collector for information coming from all the devices installed on the vehicle and for user requests.

By means of one or more data connectors associated with the inverter casing, this electronic control unit can be connected both with the battery control unit and with an instrument panel, usually called a Dashboard, which can include the manual commands available to the user, such as an ignition command and/or speed control (accelerator), and also a communication interface, usually called HMI (Human Machine Interface), through which the electronic control unit can provide the user with vehicle information (e.g. speed, battery's state of charge, etc.) and operating statuses.

To enable the operation of this VMU, the outer casing of the inverter may also contain a sensor for the current supplied by the inverter output, as well as an additional power supply, which is adapted to receive the battery voltage from the second electrical connector and convert it into a different voltage suitable for supplying the driver circuit and the electronic control unit.

By means of additional electrical connectors, which can optionally be integrated into the data connectors, this additional power supply can also be used to supply power to the vehicle's accessory devices, such as the direction indicators, lights and all instrument panel devices, creating a subsystem commonly known as DC-DC supply.

It is very clear from the above that the battery and the inverter are currently two relatively complex devices, each containing numerous relatively sophisticated technological components that also make them quite expensive.

To reduce these costs, the trend of many companies, especially those from Asia, is to produce and market highly standardised batteries and inverters that can be installed in essentially any electric vehicle.

In this way, it is advantageously possible to achieve a significant economy of scale, which reduces the cost of the individual device but does not reduce its inherent complexity and does not solve other important critical issues related to the installation of an electric powertrain on a vehicle.

One of these critical issues is still having to manage a large number of complex devices which, both during the design phase of a new electric vehicle and during its production, can lead to difficulties in procurement, storage, installation and testing.

The use of numerous complex devices also leads to an increase in possible causes of malfunctioning and failure, which reduces the reliability of the electric vehicle.

Batteries and inverters that are installed in electric vehicles also have to be connected to each other via numerous cables, which can cause electromagnetic compatibility problems, can be a source of further malfunctions, and can be subject to oxidation or other deterioration phenomena, e.g. due to moisture, which reduce their efficiency and reliability.

### Disclosure of the invention

In light of that disclosed, it is one object of the present invention to resolve, or at least significantly reduce, the mentioned drawbacks of the known technique within the scope of a simple, rational and affordable solution.

These and other objects are reached thanks to the characteristics of the invention as set forth in the independent claims. The dependent claims outline preferred and/or particularly advantageous aspects of the invention which however are not strictly required for the implementation thereof.

In particular, one embodiment of the present invention makes available an integrated device for powering electric vehicles, comprising at least:
- an outer casing,
- a rechargeable electric battery, preferably lithium-ion, placed in the outer casing,
- a charging socket associated with the outer casing and adapted to allow charging the electric battery,
- an inverter, preferably a three-phase bridge, placed in the outer casing and adapted to convert a DC voltage supplied by the electric battery into an AC voltage,
- a first electrical connector associated with the outer casing and connected to an electrical machine (e.g. motor) to transmit the alternating voltage generated by the inverter to the latter, and
- an electronic control unit placed in the outer casing, power supplied by the electric battery and configured to manage the operation of the electric battery and of the inverter.

With this solution, a single integrated device or, according to another point of view, an advanced battery is made available, which integrates the battery and the inverter and which, with a single (sole) electronic control unit, is advantageously able to perform functions conventionally delegated to the microcontroller of the Battery Management System (BMS) and the microcontroller of the Vehicle Management Unit (VMU).

In this way, the integrated device of the present invention comprises significantly fewer electrical/electronic components overall than using a separate battery and inverter, reducing the complexity and overall cost of the electric powertrain.

The integration also achieves a significant reduction in the number of electrical connectors and cables needed to make the electric powertrain, as all those conventionally needed to functionally connect the battery to the inverter are effectively eliminated.

This solution thus produces a significant competitive advantage for the developer and manufacturer of an electric vehicle, in particular because it allows a considerable increase in reliability, enables the powertrain to be fully tested before installation on the vehicle, involves less effort in terms of component management in the design of the electric vehicle, reduces the number of total components used at system level, and, thanks to the lower number of cables, reduces the electromagnetic compatibility problems typical of an electric vehicle.

An aspect of the invention provides that the integrated device may further comprise a charging switch, for example a MOSFET, which is placed in the outer casing and is adapted to selectively enable or prevent charging of the electric battery, for example selectively connecting and disconnecting the charging socket and/or the electrical machine (when operating as a generator) from the electric battery, and that the electronic control unit may be configured to control said charging switch.

This provides a particularly simple and effective solution for the electronic control unit to automatically interrupt and/or resume battery charging when necessary.

According to another aspect of the invention, the integrated device may comprise an inverter driver circuit placed in the outer casing and powered by the electric battery, and the electronic control unit may be configured to control said driver circuit.

This provides a particularly simple and effective solution for the electronic control unit to automatically regulate the AC voltage that is applied to the first electrical connector, i.e. the electrical machine (e.g. motor) that can be connected to it.

For example, the electronic control unit can be configured to vary the frequency and/or amplitude of the AC voltage generated by the inverter in order to obtain a corresponding change in the rotational speed of the electrical machine (e.g. motor).

A further aspect of the invention provides that the integrated device may comprise an electrical front-end circuit of the electric battery, for example a so-called AFE (Active Front End), which is placed in the outer casing, is power supplied by the electric battery and is adapted to detect one or more operating parameters of the electric battery itself, and that the electronic control unit may be configured to manage the operation of the electric battery and/or the inverter based on the operating parameters detected by said electrical front-end circuit.

For example, the electrical front-end circuit can be configured to detect the voltage and/or state of charge of the electric battery and/or individual cells comprising it.

Based on the measured value of one or more of these operating parameters, the electronic control unit can then be configured to control the charging switch and/or the inverter driver circuit.

In particular, the electronic control unit can be configured to open the charging switch, i.e. interrupt the charging of the electric battery, if the voltage and/or state of charge of the electric battery and/or one of its cells is higher than a predefined threshold value, i.e. if the electric battery is in an overvoltage condition.

Additionally or alternatively, the electronic control unit can be configured to control the inverter's driver circuit in order to reduce power consumption (if necessary to interrupt the power supply to the electrical machine), if the voltage and/or state of charge of the electric battery and/or one of its cells is below a predefined threshold value, or if the electric battery is in an undervoltage condition.

In general terms, the electronic control unit can be configured to control the charging switch and/or the driver circuit of the inverter, so that each of the operating parameters detected by the front-end electrical circuit remains within a predetermined range of permissible values that can be set by the SOA (Safe Operating Area) of the electric battery. According to another aspect of the invention, the integrated device may comprise an electric battery temperature sensor placed in the outer casing, and the electronic control unit may be configured to manage the operation of the electric battery and/or the inverter based on the temperature measured by said temperature sensor.

In this way, the electronic control unit can be configured to control the charging switch and/or the driver circuit of the inverter, so that the temperature value of the electric battery remains within a predetermined range of permissible values, which can also be set by the SOA (Safe Operating Area) of the battery.

For example, the electronic control unit can be configured to open the charging switch, i.e. to interrupt the charging of the battery, or to control the inverter driver circuit in order to reduce energy consumption (if necessary to interrupt the power supply to the electrical machine), where the measured temperature of the battery is higher than a first pre-set threshold value or is lower than a second pre-set threshold value, where the latter is lower than the former.

According to another aspect of the invention, the integrated device may comprise a current sensor placed in the outer casing and adapted to measure an electric current circulating in the electric battery and/or the inverter, and the electronic control unit may be configured to manage the operation of the electric battery and/or the inverter based on the current measured by said current sensor.

With this solution it is advantageously possible to achieve more precise and effective control of the electric battery and/or inverter.

Another aspect of the invention is that the integrated device may comprise at least one data connector associated with the outer casing, which is connected to the electronic control unit and can be connected to one or more accessory devices .

Thanks to this solution, the electronic control unit is effectively able to exchange data with the aforementioned accessory devices, e.g. to operate complete vehicle management.

In this regard, the accessory devices may include an external control member, e.g. but not necessarily of the manual type, and the electronic control unit may be configured to manage the operation of the electric battery and/or inverter based on inputs received from said external control body via the data connector.

For example, the external control member may be a button, a lever, a pedal, a knob or any other movable member that can be operated by a user in multiple positions corresponding to different torque demands on the electrical machine (e.g. accelerator). Based on this input, i.e. on the position of this external control member, the electronic control unit can be configured to control the driver circuit of the inverter.

In particular, the electronic control unit can be configured to control the driver circuit of the inverter in such a way as to increase the electric power transmitted to the electrical machine, if the position of the external control member corresponds to a greater torque demand and, vice versa, to control the driver circuit of the inverter in such a way as to reduce the electric power transmitted to the electrical machine, if the position of the external control unit corresponds to a lower torque demand.

In some embodiments, this external control member can be housed in an instrument panel (Dashboard), which can be connected to the data connector as a whole and can comprise other manual control members to provide other inputs to the electronic control unit.

Another aspect of the invention provides that accessory devices may include a communication interface, for example an HMI (Human Machine Interface), and that the electronic control unit may be configured to transmit information to said communication interface via the data connector.

This information can include, for example, the battery's state of charge, which can be directly detected by the battery's front-end circuit, and/or other functional parameters, such as vehicle speed, which can be detected by sensors external to the integrated device and which can also be connected to the data connector.

The communication interface may comprise a display or other appropriate light and/or sound indicators, which may possibly be integrated into the instrument panel.

According to a different aspect of the invention, the integrated device may comprise a (single) power supply placed in the outer casing and adapted to convert a voltage supplied by the electric battery into a voltage supplying the electronic control unit and, possibly, the front-end electric circuit of the battery and the driver circuit of the inverter.

In this way, it is advantageously possible to supply all components with a single power supply, which, in the known technique, were supplied with two separate power supplies. Another aspect of the invention is that the integrated device may comprise a second electrical connector associated with the outer casing, which is connected to the power supply and can be connected to one or more accessory devices in order to provide these with a supply voltage.

Thanks to this solution, the integrated device is advantageously able to supply power not only to the electrical machine (e.g. motor) responsible for the movement of the vehicle, but also to accessory devices, such as direction indicators, lights and communication interface instruments, as part of an overall vehicle management.

In practice, this solution allows the integrated device to also perform the DC-DC supply function.

In this context, it is also preferable for the data connector and the second electrical connector to be integrated to form a single connector.

Thus, by connecting accessory devices to this single connector, the integrated device of the present invention is advantageously able to both power them electrically and exchange data with them, reducing the number of cables and installation difficulties.

Ultimately, the integrated device outlined above is not only the energy reservoir of the electric vehicle, but becomes the manager of the entire electric vehicle, performing in practice the functions of BMS (Battery Management System), inverter, DC/DC supply and VMU (Vehicle Management Unit).

The integrated device of the present invention will thus be a single component capable of operating a complete electric vehicle.

Another embodiment of the present invention therefore makes available an electric vehicle comprising at least one locomotion member, e.g., a drive wheel, an electrical machine (e.g. motor) capable of operating said locomotion member, and the integrated device outlined above connected to the electrical machine.

This embodiment achieves essentially the same advantages as mentioned above, particularly in terms of component reduction, safety, simplicity and cost-effectiveness.

### Brief description of the figures

Further features and advantages of the invention will be more apparent after reading the following description provided by way of a non-limiting example, with the aid of the figure illustrated in the appended table.

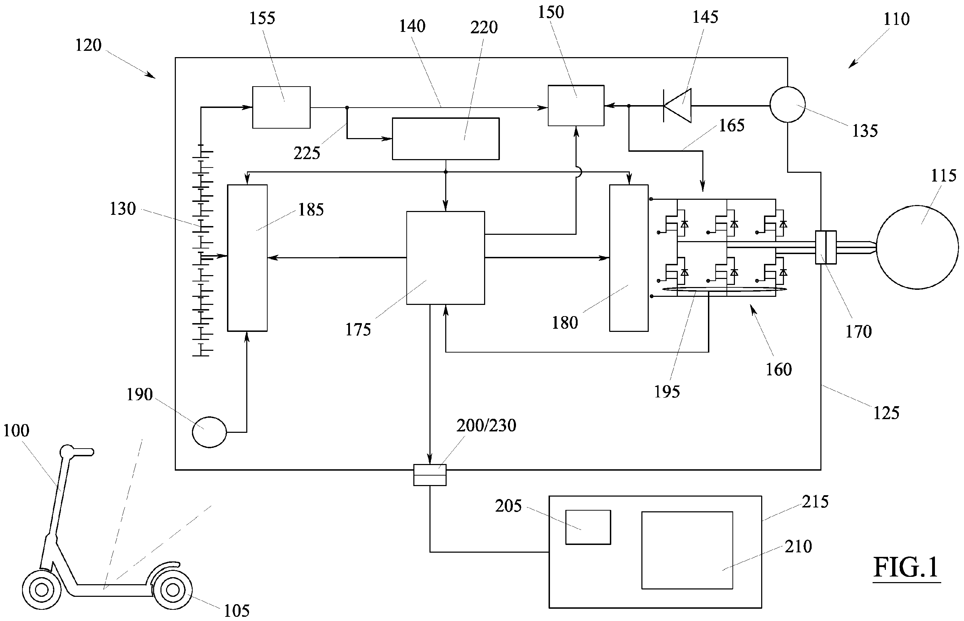

Figure 1 schematically shows an electric vehicle equipped with an integrated device in accordance with an embodiment of the present invention.

### Detailed description

The above-mentioned figure shows an electric vehicle 100, in this case an electric kick scooter, without excluding that, in other embodiments, the electric vehicle 100 could be any other type, for example but not necessarily an electric bicycle, an electric scooter or an electric car.

The electric vehicle 100 generally comprises at least one locomotion member 105, which is adapted to interact with the means on which (or in which) the electric vehicle 100 is to move, so as to discharge onto the latter the torque necessary to cause said movement. In the example shown, the locomotion member 105 is a drive wheel adapted to stand on the ground, but it is not excluded that, in other applications, the locomotion member 105 could be a track, a propeller or any other member suitable for the purpose.

In addition to the locomotion member 105, the electric vehicle 100 includes a propulsion unit 110, usually called a powertrain, which is responsible for providing the mechanical power needed to set the locomotion member 105 in motion.

In the embodiment described herein, the propulsion unit 110 comprises first of all an electrical machine 115, which is adapted to be power supplied by an alternating current in order to operate as an electric motor and drive the locomotion member 105.

The electrical machine 115 may, for example, be an asynchronous or three-phase synchronous electrical machine (motor).

Under certain conditions, e.g. during regenerative braking, descents, etc., the electrical machine 115 can also function as an electric generator to produce electricity.

The propulsion unit 110 further comprises an integrated device 120, which is capable, on its own, of performing at least the functions of storing electrical energy and transferring said electrical energy to the electrical machine 115, to enable it to function.

The electrical energy stored in the integrated device can come from external sources or, for example, under the conditions mentioned above, directly from the electrical machine 115 operating as a generator.

As will become clearer later, the integrated device 120 is also preferably able to manage the operation of the entire electric vehicle 100 on its own.

This integrated device 120 comprises an outer casing 125, which can be made of metal, plastic or any other material, and which is designed to contain substantially all the internal components.

The internal components include, in particular, at least one rechargeable electric battery 130.

An electric battery 130 means any electric accumulator, i.e. any system, installation or device capable of storing electrical energy upon charging and recharging, holding it for a more or less long time in some form, and then returning it more or less in full when it is required.

Preferably, the electric battery 130 is an electrochemical-type accumulator, e.g. lithium-ion, and may comprise a plurality of cells connected in series.

In order to enable charging of the electric battery 130, the integrated device 120 comprises at least one charging socket 135, which is electrically connected to the electric battery 130, e.g. by means of a suitable electrical connection line 140.

The charging socket 135 is associated with the outer casing 125, i.e. it is attached to the latter, so as to be accessible from the outside, and is adapted to be connected, for example by means of suitable cables, to an external electrical charger (not illustrated), for example an AC/DC converter, which may be capable of applying to the charging socket 135 a DC voltage suitable for charging the electric battery 130.

Along the connection line 140, the integrated device 120 may comprise a safety diode 145, which is configured to only allow current to flow from the charging socket 135 to the electric battery 130, preventing the opposite flow.

The internal components of the integrated device 120 may further comprise a charging switch 150, for example a MOSFET switch, which may be positioned along the connection line 140, for example between the charging socket 135 and the electric battery 130, more preferably between the latter and the safety diode 145.

This charging switch 150 may be "closed" (e.g., brought into a conducting condition) or "open" (e.g., brought into a disabling condition), so as to selectively connect or disconnect the charging socket 135 from/to the electric battery 130 and, consequently, allow or respectively prevent the latter from being charged, e.g., even when the charging socket 135 is connected to the external charger.

The charging switch 150 can also be used to interrupt the flow of electrical energy from the electrical machine 115 to the electric battery 130, for example during regenerative braking of the vehicle 100, downhill stretches, etc.

The internal components may also include a protective fuse 155, which may be placed along the connection line 140, e.g. between the electric battery 130 and the charging switch 150.

Within the outer casing 125, the integrated device 120 also comprises an inverter 160, i.e., an electrical circuit adapted to transform the direct voltage supplied by the electric battery 130 into an alternating voltage suitable for powering the electrical machine 115.

The electrical power voltage which supplies the inverter 160 and, therefore, which is intended to be transferred to the electrical machine 115, may be drawn from the electric battery 130 via an electrical branch 165 which is derived from the connection line 140, for example from an electrical node interposed between the charging socket 135 and the charging switch 150, more preferably between the latter and the safety diode 145.

The inverter 160, which can be a three-phase bridge inverter, for example, generally comprises a plurality of active switches, e.g. transistors, MOSFETs, thyristors or IGBTs, which, appropriately driven, convert the DC input voltage into an AC output voltage having a predefined frequency.

By varying the control of the active switches, it is possible to change the frequency and/or amplitude of the alternating voltage generated by the inverter, which in turn can result in a corresponding change in the rotational speed of the electrical machine 115 (e.g. motor). The alternating voltage generated by the inverter 160 can be applied to a first electrical connector 170, which is associated with the outer casing 125 of the integrated device 120, i.e. it is attached to the latter, so as to be accessible from the outside and can be connected, for example by means of suitable wiring, to the electrical machine 115.

In order to manage the operation of the inverter 160 and the electric battery 130, the internal components of the integrated device 120 may comprise a (single) electronic control unit 175, e.g. processor-based or microprocessor-based.

This electronic control unit 175 may be connected with an electrical driver circuit 180 of the inverter 160, which is installed within the outer casing 125 of the integrated device 120 and is connected to the active switches of the inverter 160, typically to their gate terminals, to provide the electrical signals responsible for switching such active switches from a conducting condition to a disabling condition and vice versa.

The electronic control unit 175 can also be connected with the charging switch 150 and/or an electrical front-end circuit 185 of the electric battery 130, e.g. a so-called AFE (Active Front End).

The electrical front-end circuit 185 is also installed within the outer casing 125 of the integrated device 120 and is connected to the electric battery 130 to detect one or more operating parameters.

By way of example, these operating parameters may include the voltage and/or state of charge of the electric battery 130 and/or its individual cells.

The internal components of the integrated device 120 may further comprise a temperature sensor 190 and/or a current sensor 195, each of which may be connected with the electronic control unit 175, so as to provide it with further inputs on the basis of which it may manage the electric battery 130 and/or the inverter 160.

In particular, the temperature sensor 190 is used to measure the temperature of the electric battery 130 and can be connected to the electronic control unit 175 via the electrical front-end circuit 185.

The current sensor 195, on the other hand, measures an electric current circulating in the inverter 160 and/or the electric battery 130.

The electronic control unit 175 may be further connected with at least one data connector 200, which may be associated with the outer casing 125 of the integrated device 120, so as to be accessible from the outside and be able to be connected with one or more accessory devices installed on board the electric vehicle 100.

In this way, the electronic control unit 175 of the integrated device 120 can exchange data with, and/or act as a collector of information from, all accessory devices of the electric vehicle 100.

By way of example, these accessory devices may comprise at least one external control member 205, for example but not necessarily of the manual type, such as a button, lever, pedal, knob or any other movable member which, in the manner of an accelerator, may be manually operated by the user of the electric vehicle 100 so as to move it to multiple positions corresponding to different torque demands on the electrical machine 115. Accessory devices may also include a communication interface 210, i.e. a so-called HMI (Human Machine Interface), which may include, for example, an electronic display and/or other appropriate light and/or sound indicators.

This communication interface 210 can optionally be integrated into an instrument panel (Dashboard) 215, which can also include the external control unit 205 and can be wired as one to the data connector 200 of the integrated device 120.

The accessory devices may also comprise additional components (not illustrated), such as direction indicators, headlamps, position lights and sensors of the running data of the electric vehicle 100 (e.g. a speedometer to measure the speed of the electric vehicle 100). The electronic control unit 175 and, possibly, the driver circuit 180 and/or the front-end electrical circuit 185, may be powered by the electric battery 130, for example via a (single) suitable power supply 220, which is also preferably contained in the outer casing 125 of the integrated device 120.

The power supply 220 may be any electrical circuit capable of converting the DC voltage output from the electric battery 130 into a DC voltage having one or more different characteristics, for example a different voltage value, so as to make it suitable for power supplying the electronic control unit 175 and, possibly, the driver circuit 180 and/or the front-end electrical circuit 185.

The power supply 220 may receive the voltage from the electric battery 130 via an electric branch 225 which is derived from the connection line 140, for example from an electrical node interposed between the electric battery 130 and the charging switch 150, more preferably between the latter and the fuse 155.

The power supply 220 can be further connected to a second electrical connector 230, which is associated with, i.e. fixed to, the outer casing 125, so that it is accessible from the outside and can be connected to the accessory devices of the electric vehicle 100. Thus, through the power supply 220, the integrated device 120 is advantageously also able to power supply the above-mentioned accessory devices, performing the DC-DC supply function.

In the preferred embodiment illustrated herein, the second electrical connector 230 is integrated into the data connector 200, creating a single connector through which accessory devices can be power supplied and can exchange data with the electronic control unit 175.

In some embodiments, this connector can also integrate the charging socket 135.

In this manner, the integrated device 120 may comprise only two connectors with the outside, namely the first electrical connector 170, for connection with the electrical machine 115, and the data/electrical connector 200/230, for connection with accessory devices and/or the external electrical charger, and be equally capable of managing the operation of the entire electric vehicle 100. In particular, by means of the electronic control unit 175, the integrated device 120 may be capable of effectively performing the Battery Management System (BMS) function.

For this purpose, the electronic control unit 175 may be configured to use the detected operating parameters of the electrical front-end circuit 185 and/or the temperature detected by the temperature sensor 190, to control the charging switch 150 (when the charging socket 135 is connected to the external charger) and/or the driver circuit 180 of the inverter 160.

For example, the electronic control unit 175 may be configured to control the charging switch 150 and/or the driver circuit 180 of the inverter 160, so that each of the operating parameters detected by the front-end electrical circuit 185 and/or the temperature of the electric battery 130 measured by the temperature sensor 190 always remains within a predetermined range of permissible values, which may be set by the SOA (Safe Operating Area) of the electric battery 130.

Specifically, the electronic control unit 175 can be configured to open the charging switch 150, i.e., to interrupt charging of the electric battery 130, if the voltage and/or state of charge of the electric battery 130 and/or one of its cells is higher than a predetermined maximum threshold value, i.e., if the electric battery 130 is in an overvoltage condition. The electronic control unit 175 may also be configured to control the driver circuit 180 of the inverter 160 in order to reduce power consumption (if necessary to interrupt the power supply of the electrical machine 115), if the voltage and/or state of charge of the electric battery 130 and/or one of its cells is below a predefined minimum threshold value, or if the electric battery 130 is in an undervoltage condition.

The electronic control unit 175 may be contextually configured to open the charging switch 150, i.e. to interrupt the charging of the electric battery 130, or to control the driver circuit 180 of the inverter 160 so as to reduce the power consumption (if necessary to interrupt the power supply of the electrical machine 115), if the temperature of the electric battery 130 measured by the temperature sensor 190 is higher than a predefined maximum threshold value or is lower than a predefined minimum threshold value, where the latter is lower than the maximum threshold value.

By means of the electronic control unit 175, the integrated device 120 can also effectively perform the Vehicle Management Unit (VMU) function.

For example, the electronic control unit 175 can be configured to use the input from the external control device 205, to control the driver circuit 180 of the inverter 160 in accordance with the demand of the electric vehicle user 100.

In particular, the electronic control unit 175 may be configured to control the driver circuit 180 of the inverter 160 so as to increase the electric power transmitted to the electrical machine 115 (e.g., by increasing the frequency and/or amplitude of the alternating voltage), if the position of the external control member 205 corresponds to a higher torque demand, and conversely, to control the driver circuit 180 of the inverter 160 so as to reduce the electric power transmitted to the electrical machine 115 (e.g., by reducing the frequency of the alternating voltage), if the position of the external control member 205 corresponds to a lower torque demand.

At the same time, the electronic control unit 175 can also be configured to transmit, via the data connector 200, useful information that can be made available to the user of the electric vehicle 100 via the communication interface 210.

This information may include, for example, the state of charge of the electric battery 130, which may be directly detected by the front-end circuit 185, and/or other functional parameters, such as the speed of the electric vehicle 100, which may be detected by sensors external to the integrated device 120 and which may also be connected to the data connector 200, in the manner of accessory devices.

Ultimately, the integrated device 120 represents an advanced battery that can manage the entire electric vehicle 100, performing the functions of energy tank, inverter, BMS (Battery Management System), VMU (Vehicle Management Unit) and DC/DC supply. The integrated device 120 is thus a single component able to handle a complete electric vehicle 100 on its own.

This integrated device 120 produces a significant competitive advantage for the developer and manufacturer of the electric vehicle 100, in particular because it allows a considerable increase in reliability, enables the propulsion unit (powertrain) 110 to be fully tested prior to installation on the electric vehicle 100, results in less effort in terms of component management in the design of the electric vehicle 100, reduces the number of total components used at system level and, due to the lower number of cables, reduces the electromagnetic compatibility problems typical of an electric vehicle 100.

Obviously, a person skilled in the art may bring about several technical-applicative modifications to what hereinbefore described, without departing from the scope of the invention as claimed hereinafter.

## Claims

1. An integrated device (120) for power supplying electric vehicles (100), comprising at least:
- an outer casing (125),
- a rechargeable electric battery (130) placed in the outer casing (125),
- a charging socket (135) associated with the outer casing (125) and adapted to allow charging the electric battery (130),
- an inverter (160) placed in the outer casing (125) and adapted to convert a DC voltage supplied by the electric battery (130) into an AC voltage,
- a first electrical connector (170) associated with the outer casing (125) and connectable to an electrical machine (115) to transmit the AC voltage generated by the inverter (160) to the latter, and
- an electronic control unit (175) placed in the outer casing (125), power supplied by the electric battery (130) and configured to manage the operation of the electric battery (130) and of the inverter (160).

2. An integrated device (120) according to claim 1, comprising:
- a charging switch (150) placed in the outer casing (125), and adapted to selectively allow or prevent charging the electric battery (130),
the electronic control unit (175) being configured to control said charging switch (150).

3. An integrated device (120) according to any one of the preceding claims, comprising:
- an electric driver circuit (180) of the inverter (160) placed in the outer casing (125) and power supplied by the electric battery (130),
the electronic control unit (175) being configured to control said electric driver circuit (180).

4. An integrated device (120) according to any one of the preceding claims, comprising:
- an electrical front-end circuit (185) of the electric battery (130) placed in the outer casing (125), power supplied by the electric battery (130) and adapted to detect one or more operating parameters of said electric battery (130),
the electronic control unit (175) being configured to manage the operation of the electric battery (130) and/or the inverter (160) based on the operating parameters detected by the electrical front-end circuit (185).

5. An integrated device (120) according to any one of the preceding claims, comprising:
- a temperature sensor (190) of the electric battery (130) placed in the casing,
the electronic control unit (175) being configured to manage the operation of the electric battery (130) and/or the inverter (160) based on the temperature measured by said temperature sensor (190).

6. An integrated device (120) according to any one of the preceding claims, comprising:
- a current sensor (195) placed in the outer casing (125) and adapted to measure an electric current circulating in the electric battery (130) and/or the inverter (160),
the electronic control unit (175) being configured to manage the operation of the electric battery (130) and/or the inverter (160) based on the current measured by said current sensor (195).

7. An integrated device (120) according to any one of the preceding claims, comprising at least one data connector (200) associated with the outer casing (125), which is connected to the electronic control unit (175) and is connectable to one or more accessory devices (205, 210).

8. An integrated device (120) according to claim 7, wherein said accessory devices comprise an external control member (205), and wherein the electronic control unit (175) is configured to manage the operation of the electric battery (130) and/or the inverter (160) based on inputs received by said external control member (205) via said data connector (200).

9. An integrated device (120) according to claim 7 or 8, wherein said accessory devices comprise a communication interface (210), and wherein the electronic control unit (175) is configured to transmit information to said communication interface (210) via the data connector (200).

10. An integrated device (120) according to any one of the preceding claims, comprising:
- a power supply device (220) placed in the outer casing (125) and adapted to convert a voltage supplied by the electric battery (130) into a power supply voltage of the electronic control unit (175).

11. An integrated device (120) according to claim 10, comprising:
- a second electrical connector (230) associated with the outer casing (125) connectable to accessory devices (205, 210) to provide them with a power supply voltage.

12. An integrated device (120) according to claims 7 and 11, wherein said data connector (200) and said second electrical connector (230) are integrated to form a single connector.

13. An electric vehicle (100) comprising:
- at least one locomotion member (105);
- an electrical machine (115) adapted to operate said locomotion member (105);
- an integrated device (120) according to any one of the preceding claims connected to the electrical machine (115).
